# EUROPÄISCHE PATENTSCHRIFT

(11) **EP 1 710 981 B1**
(45) Veröffentlichungstag und Bekanntmachung des Hinweises auf die Patenterteilung: **06.02.2008**
(21) Anmeldenummer: 05007296.6
(22) Anmeldetag: 04.04.2005
(51) Int. Cl.: H04L 29/08

(54) **Netzwerkknoten und Verfahren zum Bereitstellen von Internetdiensten auf Internetmarktplätzen**
A method and an apparatus for providing Internet services in Internet marketplaces
Procédé et appareil pour mettre à disposition les services Internet sur les marchés d'Internet

(43) Veröffentlichungstag der Anmeldung: 11.10.2006
(73) Patentinhaber: Deutsche Post AG, 53113 Bonn (DE)
(72) Erfinder: Pogatzki, Martin, 53117 Bonn (DE); Stebens, André, Dr., 40547 Düsseldorf (DE); Werner, Harald, 68309 Mannheim (DE)
(74) Vertreter: Jostarndt, Hans-Dieter

(56) Entgegenhaltungen:
- EP-A- 1 041 491
- EP-A- 1 124 192
- US-A1- 2002 107 752
- US-A1- 2003 036 966
- US-A1- 2004 062 255

## Beschreibung

Die Erfindung betrifft einen Netzwerkknoten und ein Verfahren zum Bereitstellen wenigstens eines Internetdienstes eines Dienstanbieters für Nutzer eines Internetmarktplatzes.

Zur Bereitstellung von Internetdiensten werden in der Regel Applikationen verwendet, die auf einem Internet-Server eines Dienstanbieters ausgeführt werden. Der Aufruf der Applikationen durch einen Kunden des Dienstanbieters erfolgt dabei durch eine Anforderung über eine Webseite, die von dem Dienstanbieter bereitgestellt wird.

Werden Internetdienste von dem Dienstanbieter auf einem oder mehreren Internetmarktplätzen bereitgestellt, die von einem weiteren Marktplatzbetreiber betrieben werden, besteht oftmals das Problem, dass eine Anpassung der Internetdienste des Dienstanbieters an den Internetmarktplatz sehr aufwändig ist. Dies resultiert insbesondere daraus, dass für verschiedene Internetmarktplätze in der Regel unterschiedlich gestaltete Datensätze bereitgestellt werden müssen, wie beispielsweise Datensätze unterschiedlicher Datenformate zur Anforderung der Internetdienste zur Bereitstellung der Ergebnisse der ausgeführten Internetdienste.

Aus der US-Patentanmeldung US 2002/107752 sind ein System und ein Verfahren zum Integrieren von weborientierten Bestellungen in ein Backend-Geschäftssystem bekannt, bei denen Käufer- und Verkäufersysteme über Adapter mit einem Datenmanager verbunden sind. Ein Käufer übermittelt dabei anhand eines Formulars eine Kauforder in einem käuferspezifischen Format an den Datenmanager. Das Formular kann direkt oder über Adaptermodule an den Datenmanager gesendet oder über eine browsergestützte Schnittstelle bereitgestellt werden. Der Datenmanager übersetzt die Kauforder in eine neutrales Format und speichert sie in einer zentralen Datenbank ab, in der sie mit einer Verkäufer verknüpft wird. Dann wird die Kauforder an das Backend-System des Verkäufers übermittelt, wobei sie in ein verkäuferspezifisches Format übersetzt wird.

Die US-Patentanmeldung US 2004/062255 offenbart ein System und ein Verfahren zum Kommunizieren in einem Computernetzwerk, insbesondere durch Durchführung von Reservierungen. Ein Client ist dabei über eine Multiplexing-Einheit mit einem Server oder mehreren Servern verbunden, die einen Dienst anbieten. Dienstanforderungen des Clients werden dabei innerhalb der Multiplexing-Einheit in das Format umgewandelt, welches ein Anwendungsprogramm des Servers benötigt. Ferner werden die Dienstanforderung entsprechend einer Lastverteilung von der Multiplexing-Einheit an die Server übermittelt.

Ferner beschreibt die US-Patentanmeldung US 2003/036966 ein System und ein Verfahren zur Integration einer E-Commerce-Anwendung in ein Backend-System eines Warenanbieters hervor, bei denen Formate von Nachrichten, die zwischen der E-Commerce-Anwendung und dem Backend-System ausgetauscht werden, in einem Integrationsknoten umgewandelt werden. So wird die Kauforder eines Kunden, die der E-Commerce-Anwendung empfangen wird, in eine XML-Nachricht eingebracht. Deren Format wird in den Integrationsknoten in das von Backend-System verwendete Format umgewandelt und an dieses System übermittelt.

Es ist eine Aufgabe der Erfindung, Internetdienste in einfacher Weise auf Internetmarktplätzen bereitstellen zu können und dabei insbesondere den Aufwand zur Anbindung von Internetmarktplätzen an die zur Ausführung der Internetdienste vorgesehenen Datenverarbeitungssysteme eines Dienstanbieters zu minimieren.

Erfindungsgemäß wird diese Aufgabe durch einen Netzwerkknoten mit den Merkmalen des Patentanspruchs 1 gelöst.

Erfindungsgemäß wird diese Aufgabe ferner durch ein Verfahren mit den Merkmalen des Patentanspruchs 16 gelöst.

Zweckmäßige Weiterbildungen der Erfindung sind in den Unteransprüchen angegeben.

Der Netzwerkknoten zum Bereitstellen wenigstens eines Internetdienstes, der in wenigstens einem Anbieterserver eines Dienstanbieters ausgeführt wird, für Nutzer eines Internetmarktplatzes umfasst insbesondere
- wenigstens einen äußeren Konnektor zum Empfangen einer Dienstanforderung, deren Erzeugung in einem Nutzercomputer eines Internetmarktplatznutzers initiierbar ist, und zum Übermitteln eines in dem Anbieterserver ermittelten Bearbeitungsergebnisses an den Nutzercomputer, wobei der äußere Konnektor in der Lage ist, eine an den Internetmarktplatz angepasste Formatänderung der Dienstanforderung und des Bearbeitungsergebnisses vorzunehmen,
- eine mit dem äußeren Konnektor verbundene Transformationseinheit zum Ermitteln wenigstens eines Anbieterservers zur Ausführung des Dienstes anhand von Angaben, die in der Dienstanforderung enthalten sind, und zum Adressieren der Dienstanforderung an den ermittelten Anbieterserver und
- wenigstens einen mit der Transformationseinheit verbundenen inneren Konnektor zum Übermitteln der Dienstanforderung an den Anbieterserver und zum Empfangen des in dem Anbieterser ver ermittelten Bearbeitungsergebnisses von dem Anbieterserver.

Der Begriff Internetmarktplatz ist dabei im Rahmen der Erfindung in seiner weitesten Bedeutung zu verstehen und umfasst insbesondere Webportale, wie beispielsweise Auktionsportale Tauschbörsen oder Diskussionsforen im Internet sowie Webseiten, die beispielsweise von Online-Shops bereitgestellt werden.

Der Netzwerkknoten ermöglicht es, von einem Dienstanbieter bereitgestellte Internetdienste auf einem Internetmarktplatz bereitzustellen, ohne dass Anpassungen der Anbieterserver, welche die Internetdienste ausführen, an den Internetmarktplatz erforderlich sind. Die Interpretation der Dienstanforderung, d.h. insbesondere die Vornahme erforderlicher Formatänderungen, die Ermittlung des zur Ausführung des Dienstes notwendigen Anbieterservers und die Adressierung der Dienstanforderung an den Anbieterserver erfolgt in dem Netzwerkknoten, so dass die zur Ausführung des Internetdienstes erforderlichen Angaben in einer marktplatzepezifischen Weise erfasst und in die Dienstanforderung eingebracht werden können, ohne dass bereits durch den Internetmarktplatz eine Anpassung an die Erfordernisse des Anbieterservers vorgenommen werden muss.

Darüber hinaus ist die Schnittstelle zwischen dem Netzwerkknoten und dem Internetmarktplatz von der Schnittstelle zwischen dem Netzwerkknoten und dem Anbieterserver entkoppelt, wodurch eine besonders große Flexibilität bei der Anpassung des Transformationsknotens erreicht wird.

Durch die äußeren Konnektoren wird mit Vorteil erreicht, dass der Netzwerkknoten selbst in einfacher und flexibler Weise an einen Internetmarktplatz und insbesondere an ein bei der Kommunikation mit einem Internetmarktplatz verwendetes Datenformat angepasst werden kann, ohne dass bei der Anpassung Änderungen der inneren Funktionalität des Netzwerkknotens, d.h. insbesondere Anpassungen der Transformationseinheit erforderlich sind.

Der äußere Konnektor ist dabei vorzugsweise durch einen Konnektorsteckplatz mit dem Netzwerkknoten verbindbar, wobei der äußere Konnektor im laufenden Betrieb des Netzwerkknotens mit dem Netzwerkknoten verbindbar und von dem Netzwerkknoten trennbar ist.

Damit ist ein unterbrechungsfreier Betrieb des Netzwerkknotens möglich, während ein äußerer Konnektor mit dem Netzwerkknoten verbunden oder von diesem getrennt wird. Ferner können Anpassungen eines äußeren Konnektors während des laufenden Betriebs des Netzwerkknotens vorgenommen werden, indem der anzupassende äußere Konnektor von dem Netzwerkknoten getrennt, angepasst und wieder mit dem Netzwerkknoten verbunden wird.

In einer bevorzugten Ausgestaltung der Erfindung ist es vorgesehen, dass der äußere Konnektor mit wenigstens einem Nutzercomputer verbunden ist, wobei der Nutzercomputer mit einem Marktplatzserver verbunden ist.

In einer bevorzugten Ausführungsform der Erfindung erzeugt die Transformationseinheit in Abhängigkeit von dem in dem Anbieterserver ermittelten Bearbeitungsergebnis eine Benachrichtigung über das Bearbeitungsergebnis, die von dem äußeren Konnektor an den Marktplatzserver übermittelt wird.

Auf diese Weise kann eine Information über die Inanspruchnahme des Internetdienstes durch einen Marktplatznutzer an den Marktplatzserver übermittelt werden. Vorteilhaft ist es so auch möglich, dass das in dem Anbieterserver ermittelte Bearbeitungsergebnis mittelbar über den Marktplatzserver an den Nutzercomputer übermittelt wird.

In einer vorteilhaften Ausführungsform der Erfindung ist der innere Konnektor des Netzwerkknotens dazu in der Lage, eine Formatänderung des Dienstprogrammaufrufs und des Bearbeitungsergebnisses vorzunehmen.

Eine Anpassung des Netzwerkknotens an den Anbieterserver bzw. das in dem Anbieterserver ausgeführte Dienstprogramm kann somit in einfacher Weise durch eine Anpassung des inneren Konnektors vorgenommen werden, ohne dass Anpassungen der inneren Funktionalität des Netzwerkknotens und insbesondere der Transformationseinheit erforderlich sind.

Der innere Konnektor ist vorzugsweise durch einen Konnektorsteckplatz mit dem Netzwerkknoten verbindbar, wobei der innere konnektor im laufenden Betrieb des Netzwerkknotens mit dem Netzwerkknoten verbunden und von dem Netzwerkknoten getrennt werden kann.

Somit ist es während des Betriebs des Netzwerkknotens möglich, innere Konnektoren mit dem Netzwerkknoten zu verbinden und innere Konnektoren von dem Netzwerkknoten zu trennen. Insbesondere werden damit auch Anpassungen von inneren Konnektoren während des laufenden Betriebs des Netzwerkknotens möglich, indem der anzupassende äußere Konnektor von dem Netzwerkknoten getrennt, angepasst und wieder mit dem Netzwerkknoten verbunden wird.

In einer vorteilhaften Ausgestaltung der Erfindung umfasst der Netzwerkknoten eine Autorisier- und Authentifiziereinheit zum Überprüfen der Berechtigung des Internetmarktplatznutzers zum Zugriff auf den Internetdienst.

Mittels der Autorisier- und Authentifiziereinheit kann die Berechtigung des Internetmarktplatznutzers bereits in dem Netzwerkknoten überprüft werden. Ferner kann auch eine Überprüfung der Zugriffsberechtigung für mehrere Internetdienste des Dienstanbieters erfolgen, so dass ein so genanntes single sign-on, d.h. eine zentrale Autorisierung für mehrere Dienste ermöglicht wird.

In einer bevorzugten Ausführungsform der Erfindung ist es vorgesehen, dass die Überprüfung der Berechtigung des Internetmarktplatznutzers zum Zugriff auf den Internetdienst anhand eines dem Internetmarktplatz zugeordneten Marktplatzberechtigungsprofils und/oder anhand eines dem Internetmarkplatznutzer zugeordneten Nutzerberechtigungsprofils durchgeführt wird.

Anhand der Berechtigungsprofile kann vorteilhaft der Umfang, in dem ein Nutzer des Internetmarktplatzes Internetdienste des Dienstanbieters in Anspruch nehmen kann, überprüft bzw. festgestellt werden. Dabei kann das Berechtigungsprofil marktplatzbezogen und/oder nutzerbezogen vorgegeben werden, so dass für unterschiedliche Internetmarktplätze und für verschiedene Benutzer der Internetmarktplätze unterschiedliche Berechtigungen zur Inanspruchnahme eines Internetdienstes vorgesehen werden können.

vorzugsweise enthält die Dienstanforderung eine Information, die mit einem dem Internetmarktplatz eindeutig zugeordneten Schlüssel verschlüsselt und in der Autorisier- und Authentifiziereinheit entschlüsselbar ist.

Anhand der verschlüsselten Information mit einem dem Internetmarktplatz eindeutig zugeordneten Schlüssel kann somit die Authentizität der Dienstanforderung festgestellt werden.

In einer weiteren bevorzugten Ausführungsform der Erfindung ist es vorgesehen, dass das Nutzerberechtigungsprofil in der Dienstanforderung enthalten ist.

Durch das Einbringen des Nutzerberechtigungsprofils in die Dienstanforderung, was vorzugsweise seitens des Internetmarktplatzes erfolgt, kann somit in der Dienstanforderung der Umfang angegeben werden, in dem der Marktplatznutzer Internetdienste des Dienstanbieters nutzen kann.

Vorzugsweise ist es dabei vorgesehen, dass das Nutzerberechtigungsprofil mit einem dem Internetmarktplatz eindeutig zugeordneten Schlüssel verschlüsselt ist oder mit einer digitalen Signatur des Internetmarktplatzes versehen ist.

Auf diese Weise kann die Authentizität des Nutzerberechtigungsprofils in dem Netzwerkknoten überprüft werden.

In einer weiteren vorteilhaften Ausführungsform der Erfindung ist es vorgesehen, dass die Autorisier- und Authentifiziereinheit das Nutzerberechtigungsprofil in Abhängigkeit von dem in dem Anbieterserver ermittelten Bearbeitungsergebnis verändern kann.

Hierdurch kann das Berechtigungsprofil eines Internetmarktplatznutzers in Abhängigkeit von der Inanspruchnahme eines bestimmten Internetdienstes des Dienstanbieters verändert werden.

Vorzugsweise ist es dabei vorgesehen, dass die Autorisier- und Authentifiziereinheit das Nutzerberechtigungsprofil in Abhängigkeit einer Anzahl von für einen Marktplatznutzer ermittelten Bearbeitungsergebnissen verändern kann.

In einer weiteren vorteilhaften Ausgestaltung der Erfindung umfasst der Netzwerkknoten eine Prüfeinheit zum Überprüfen des in dem Anbieterserver ermittelten Bearbeitungsergebnisses.

Vorzugsweise ist die Prüfeinheit dabei in der Lage, eine Vollständigkeit des Bearbeitungsergebnisses zu überprüfen.

Mittels der Prüfeinheit kann somit die Korrektheit und Vollständigkeit des Bearbeitungsergebnisses festgestellt werden. Dies kann beim Vorliegen eines Fehlers in dem Bearbeitungsergebnis beispielsweise dazu genutzt werden, innerhalb des Netzwerkknotens Benachrichtigungen über das Vorliegen eines Fehlers zu erzeugen und an den Nutzercomputer des Internetmarktplatznutzers zu übermitteln.

In einer weiteren vorteilhaften Ausgestaltung der Erfindung ist es vorgesehen, dass der Netzwerkknoten eine Berichtseinheit zum Erfassen und Auswerten der Dienstanforderungen und der Bearbeitungsergebnisse aufweist.

Das Verfahren zum Bereitstellen wenigstens eines Internetdienstes, der in wenigstens einem Anbieterserver eines Dienstanbieters ausgeführt wird, für Nutzer eines Internetmarktplatzes umfasst die folgenden Schritte:
- Empfangen einer in einem Nutzercomputer initiierten Dienstanforderung in einem äußeren Konnektor eines Netzwerkknotens,
- Vornehmen von Formatänderungen der Dienstanforderung in dem äußeren Konnektor,
- Ermitteln eines Anbieterservers anhand von Angaben, die in der Dienstanforderung enthalten sind, und Adressieren der Dienstanforderung an den Anbieterserver,
- Übermitteln der Dienstanforderung an den Anbieterserver,
- Ermitteln eines Bearbeitungsergebnisses in dem Anbieterserver und Übermitteln des Bearbeitungsergebnisses an den Netzwerkknoten und
- Empfangen des Bearbeitungsergebnisses in dem Netzwerkknoten und Übermitteln des Bearbeitungsergebnisees an den Nutzercomputer.

Vorteilhafte Weiterbildungen der Erfindung im Hinblick auf das Verfahren entsprechen den im Zusammenhang mit dem Netzwerkknoten beschriebenen Ausführungsformen der Erfindung.

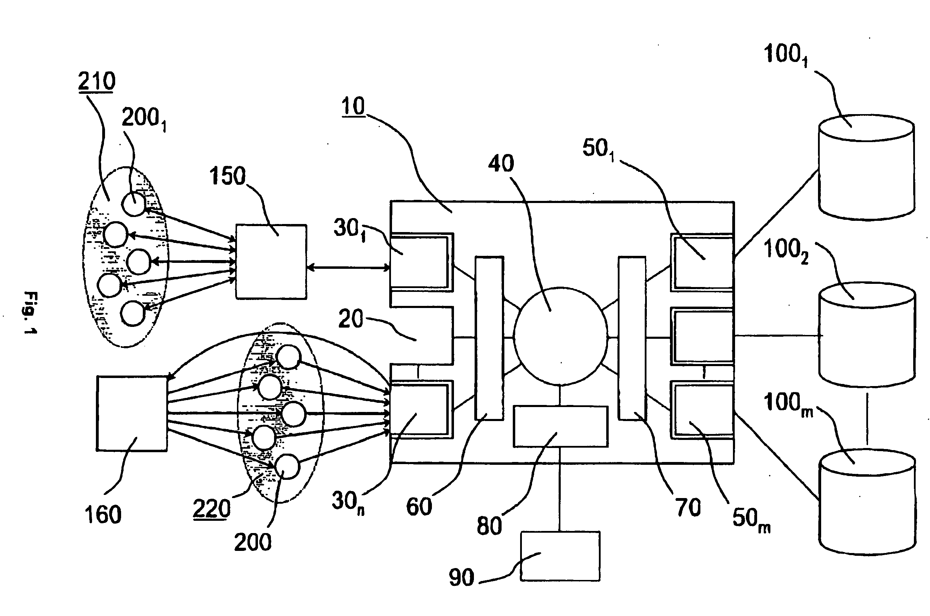

Weitere Besonderheiten und zweckmäßige Weiterbildungen der Erfindung ergeben sich aus den Unteransprüchen und der folgenden Darstellung bevorzugter Ausführungsbeispiele der Erfindung anhand der Figur 1.

Die Figur 1 zeigt eine schematische Darstellung einer Ausführungsform des erfindungsgemäßen Netzwerkknotens 10 mit angebundenen Internetmarktplätzen und Anbieterservern 100₁,...,100ₘ zur Ausführung von Dienstprogrammen.

Die Erfindung soll an dem Ausführungsbeispiel eines Netzwerkknotens 10 erläutert werden, der im Folgenden als Transformationsknoten bezeichnet wird.

Über das Internet ist der Transformationsknoten 10 an mehrere Internetmarktplätze angebunden. Beispielhaft sind in der Figur 1 dabei Anbindungen an zwei Internetmarktplätze dargestellt, die in unterschiedlichen Ausführungsformen realisiert sind.

In einem der dargestellten Fälle ist der Transformationsknoten 10 mit einem Marktplatzserver 150 eines Internetmarktplatzes verbunden, auf den Nutzer des Marktplatzes ihrerseits mittels Nutzercomputern 200 zugreifen. Die Gruppe der Nutzercomputer 200 der Markplatznutzer ist in der Figur 1 mit der Bezugsziffer 210 versehen. Eine direkte Verbindung zwischen den Nutzercomputern 200 und dem Transformationsknoten 10 besteht dabei nicht, so dass der Datenaustausch zwischen den Nutzercomputern 200 und dem Transformationsknoten 10 über den Marktplatzserver 150 erfolgt. Ein derartiger Internetmarktplatz wird im Folgenden als Transitmarktplatz bezeichnet und der Marktplatzserver 150 eines derartigen Internetmarktplatzes als Konsolidatorquelle.

In dem weiteren dargestellten Fall sind die Nutzercomputer 200 sowohl mit dem Transformationsknoten 10 als auch mit dem Marktplatzserver 160 verbunden, so dass ein Datenaustausch unmittelbar zwischen den Computern 200 und dem Transformationsknoten 10 erfolgen kann. Ein derart ausgeführter Internetmarktplatz wird im Folgenden als Flächenmarktplatz bezeichnet und der Marktplatzserver 160 eines solchen Internetmarktplatzes als Streuquelle. Die Gruppe der Nutzercomputer 200, der Markplatznutzer ist in diesem Fall mit der Bezugsziffer 220 versehen.

Der Zugriff auf den Internetmarktplatz erfolgt im Falle des Transitmarktplatzes und im Falle des Flächenmarktplatzes über das Internet auf einer Webseite des Internetmarktplatzes, die von dem Marktplatzserver 150, 160 bereitgestellt und mit einem Browserprogramm, das in den Nutzercomputern 200 ausgeführt wird, an einem Anzeigmittel der Nutzercomputer 200 dargestellt wird.

Der Transformationsknoten 10 enthält in einer vorteilhaften Ausführungsform der Erfindung äußere Konnektoren 30, die im Falle des Transitmarktplatzes mit der Konsolidatorquelle 150 und im Falle des Flächenmarktplatzes mit den Nutzercomputern 200 über ein Kommunikationsnetzwerk, vorzugsweise das Internet, verbunden sind. Die äußeren Konnektoren 30₁,...,30ₙ sind in Konnektorsteckplätze 20 des Transformationsknotens 10 eingesetzt.

Innerhalb des Transformationsknotens 10 besteht eine Verbindung zwischen den äußeren Konnektoren 30₁,...,30ₙ und einer Autorisier- und Authentifiziereinheit 60, die ihrerseits mit der Transformationseinheit 40 in Verbindung steht. Für eine direkte Datenübertragung zwischen den äußeren Konnektoren 50₁,...,50ₘ und der Transformationseinheit 40 kann die Autorisier- und Authentifiziereinheit 60 überbrückt werden.

Die Transformationseinheit 40 ist mit einer Prüfeinheit 70 verbunden, die ihrerseits mit inneren Konnektoren 50₁...,50ₘ in Verbindung steht. Auch hier kann eine direkte Verbindung zwischen der Transformationseinheit 40 und den inneren Konnektoren 50₁,...,50ₘ geschaffen werden, bei welcher die Prüfeinheit 70 überbrückt wird. Die inneren Konnektoren 50₁,...,50ₘ sind ebenfalls in Konnektorateckplätze des Transformationsknotens 10 eingesetzt und verbinden den Transformationsknoten 10 mit Servern 100₁,...,100ₘ, auf denen Dienstprogramme zur Ausführung von Internetdiensten ausgeführt werden.

Ferner umfasst der Transformationsknoten 10 eine Steuer- und Berichtseinheit 80 zur Administrierung des Transformationsknotens 10 und zur Protokollierung.

Der Transformationsknoten 10 kann als Hardware oder als Software ausgebildet sein. In einer vorteilhaften Ausführungsform der Erfindung wird er dabei in Form mehrerer Softwaremodule realisiert, die in einem Internetserver ausgeführt werden.

Den Nutzern eines Internetmarktplatzes werden Internetdienste angeboten, die von einem Dienstanbieter zur Verfügung gestellt werden, der unabhängig von dem Marktplatzbetreiber sein kann. Dienstprogramme zur Ausführung der Internetdienste werden dabei auf jeweils wenigstens einem Anbieterserver 100₁,...,100ₘ bereitgestellt, der von dem Dienstanbieter betrieben wird. Bei den Internetdiensten handelt es sich in einer vorteilhaften und später näher beschriebenen Anwendung der Erfindung um Frankier- und Logistikdienste, die beispielsweise eine Erzeugung von elektronischen Frankiervermerken, eine Erzeugung von Adressetiketten für den Versand von Postsendungen oder eine Sendungsverfolgung (Tracking) von Postsendungen ermöglichen, und von einem Logistikdienetleieter angeboten werden.

Die Anforderung der Internetdienste wird mittelbar oder unmittelbar auf einer Webseite des Internetmarktplatzes beispielsweise durch die Betätigung einer auf der Webseite angeordneten Schaltfläche initiiert. Die Erfindung ermöglicht es dabei, dass ein Internetdienst nicht auf einer Webseite des Dienstanbieters, sondern direkt auf der Webseite des Internetmarktplatzes angefordert werden kann. Insbesondere können dabei auch Webseiten, die bei der Ausführung des Dienstes gegebenenfalls als Bearbeitungsergebnis bzw. Teil-Bearbeitungsergebnis angezeigt werden, dem Erscheinungsbild der Webseiten des Internetmarktplatzes in einfacher Weise durch den Transformationsknoten 10 angepasst werden.

Mit dem Aufruf des Internetdienstes auf der Webseite des Internetmarktplatzes ist die Erzeugung einer Dienstanforderung verbunden, die insbesondere Angaben zur Ausführung des Internetdienstes enthält. Dabei handelt es sich beispielsweise um Nutzerdaten des Marktplatznutzers, die dieser in einem Dialogfeld der Webseite eingeben kann oder die in einer Datenbank des Marktplatzbetreibers gespeichert sind. Ferner enthält die Dienstanforderung Identifizierungsdaten des Internetmarktplatzes und umfasst wenigstens eine Anweisung, die es dem Transformationsknoten 10 ermöglicht, den angeforderten Internetdienst zu identifizieren. Diese Anweisung kann dabei auch implizit in der Dienstanforderung enthalten sein. So kann es beispielsweise vorgesehen sein, dass der angeforderte Internetdienst bzw. der zur Ausführung des Internetdienstes vorgesehene Anbieterserver 100₁,...,100ₘ in dem Transformationsknoten 10 anhand der Art der in der Dienstanforderung enthaltenen Angaben identifiziert wird.

Im Falle des Flächenmarktplatzes wird die Dienstanforderung durch in eine Webseite eingebrachte Skripte generiert und direkt von dem Nutzercomputer 200 über das Internet an den Transformationsknoten 10 übermittelt. Bei einem Transitmarktplatz kann die Dienstanforderung entweder durch Skripte in der Webseite des Internetmarktplatzes erzeugt und von dem Nutzercomputer 200 über die Konsolidatorquelle 150 an den Transformationsknoten 10 übermittelt werden, oder sie kann nach der Übermittlung einer entsprechenden Aufforderung von dem Nutzerzcomputer 200 an die Konsolidatorquelle 150 innerhalb der Konsolidatorquelle 150 generiert werden.

Gleichfalls ist es bei einem Transitmarktplatz möglich, dass die Dienstanforderung durch ein Skript mit dem BrowserProgramm des Nutzercomputers 200 erzeugt und durch die Konsolidatorquelle 150 beispielsweise um Identifizierungsangaben des Internetmarktplatzes, um in einer Datenbank der Konsolidatorquelle 150 gespeicherte Nutzerdaten oder um in der Datenbank der Konsolidatorquelle 150 gespeicherte Marktplatz- und/oder Nutzerberechtigungsprofile ergänzt wird. Bei einem Flächenmarktplatz werden derartige Angaben durch eine Funktionalität der in der Webseite des Internetmarktplatzes enthaltenen Skripte in die Dienstanforderung eingebracht.

Ferner ist es möglich, dass eine einzige Dienstanforderung eine Anforderung mehrerer Internetdienste enthält.

Die Verbindung zwischen dem Transformationsknaten 10 und einem Internetmarktplatz erfolgt über einen äußeren Konnektor 30₁,...,30ₙ, der individuell an den Internetmarktplatz angepasst ist. In den äußeren Konnektoren 30₁,...,30ₙ werden dabei insbesondere Formatänderungen der Dienstanforderung und der später beschriebenen, in den Anbieterservern ermittelten Bearbeitungsergebnisse vorgenommen.

Dabei handelt es sich um statische Formatänderungen, die unabhängig von dem Inhalt der Dienstanforderung vorgenommen werden. Beispiele für derartige Formatänderungen sind Umsetzungen von Protokollformaten, wie z.B. eine Umsetzung von EDIFACT-Dokumenten in XML-Dokumente und umgekehrt, sowie Änderungen von Zeichensatzkodierungen und Änderungen von Feldbezeichnungen und -reihenfolgen in der Dienstanforderung. So können beispielsweise Datensätze, wie etwa Nutzerdaten, deren Format auf die Erfordernisse des Marktplatzservers 150, 160, wie etwa ein bestimmtes in dem Marktplatzserver 150, 160 verwendetes Datenbankformat, ausgerichtet sind, konvertiert werden.

Durch die Möglichkeit der Formatänderung in den äußeren Konnektoren 30₁,...,30ₙ kann dabei sichergestellt werden, dass Änderungen, welche die Kommunikation zwischen dem Transformationsknoten 10 und einem Internetmarktplatz betreffen, keine Auswirkungen auf die innere Funktionalität des Transformationsknotens 10 und keine Auswirkung auf die Gestaltung der Anbieterserver 100₁,..., 100ₘ, bzw. der auf den Anbieterservern 100₁,...,100ₘ ausgeführten Dienstprogramme haben.

Zur Anbindung einer Vielzahl von Internetmarktplätzen verfügt der Transformationsknoten 10 über eine Vielzahl von Konnektorsteckplätzen 20 zur Aufnahme von äußeren Konnektoren 30₁,..., 30ₙ. Dabei ist es möglich, äußere Konnektoren 30₁,...,30ₙ im laufenden Betrieb des Transformationsknotens einzustecken und zu entfernen, so dass ein unterbrechungsfreier Betrieb des Transformationsknotens 10 bei einem Hinzutreten oder einem wegfall eines Internetmarktplatzes möglich ist. Bei Änderungen, die an einem äußeren Konnektor 30₁,..., 30ₙ durchgeführt werden, kann dieser ebenfalls im aktivierten Zustand des Transformationsknotens 10 entfernt, angepasst und wieder eingesteckt werden, so dass auch hier keine Betriebsunterbrechung des Transformationsknotens 10 erforderlich ist.

Eine Dienstanforderung wird von dem Transformationsknoten 10 an demjenigen äußeren Konnektor 30₁,...,30ₙ empfangen, der dem entsprechenden Internetmarktplatz zugeordnet ist, und es wird gegebenenfalls eine Formatänderung der vorgenannten Art vorgenommen. Ein Unterschied in Bezug auf die unterschiedenen Arten von Marktplätzen besteht dabei im Grundsatz nicht.

von einem äußeren Konnektor 30₁...,30ₙ wird die Dienstanforderung innerhalb des Transformationsknotens 10 an eine Authentifizier- und Autorisiereinheit 60 übergeben, die zunächst in einem Authentifizierungsschritt überprüft, ob Internetdienste des Dienstanbieters grundsätzlich genutzt werden dürfen. Die Authentifizierung erfolgt dabei auf der Basis der Identität des Internetmarktplatzes und/oder auf der Basis der Identität des Marktplatznutzers.

Die Authentifizierung geschieht anhand von Authentifizierungsinformationen, die in der Dienstanforderung enthalten sind und deren Authentizität durch den Einsatz kryptografischer Verfahren sichergestellt wird. Geeignete kryptografische Verfahren sind beispielsweise digitale Signaturen der Dienstanforderung oder eines Teils davon. Ebenso kommt es in Frage, dass Inhalte der Dienstanforderung mit einem dem Internetmarktplatz oder dem Marktplatznutzer zugeordneten Schlüssel (asymmetrische Verschlüsselung mit zertifizierten Schlüsseln) oder mit einem im Vorfeld zwischen dem Transformationsknoten 10 und dem Internetmarktplatz bzw. dem Marktplatznutzer ausgetauschten symmetrischen Schlüssel (symmetrische Verschlüsselung mit "preshared key") verschlüsselt sind.

Ist eine erfolgreiche Authentifizierung nicht möglich, bedeutet dies, dass es sich nicht um eine authentische Dienstanforderung des Nutzers eines registrierten Internetmarktplatzes handelt oder dass der Marktplatznutzer aus anderen Gründen nicht zur Inanspruchnahme von Internetdiensten des Dienstanbieters berechtigt ist. In diesem Fall erzeugt die Autorisier- und Authentifiziereinheit 60 eine Fehlermeldung, die über den äußeren Konnektor 30₁,...,30ₙ an den Nutzercomputer 200 übermittelt wird. Ferner kann eine Protokollierung der Dienstanforderung mittels der später erläuterten Steuer- und Berichtseinheit 80 vorgesehen sein.

Nach erfolgreicher Authentifizierung stellt die Authentifizier- und Autorisiereinheit 60 in einem Autorisierungsschritt die Berechtigung des Marktplatznutzers zur Nutzung von Internetdiensten fest. Dabei wird geprüft, welche Internetdienste in welchem Umfang durch den Marktplatznutzer genutzt werden dürfen. Dies erfolgt ebenfalls auf der Basis der Identität des Internetmarktplatzes und/oder der Identität des Marktplatznutzers.

Die Autorisierung eines Internetmarktplatzes erfolgt anhand eines Marktplatzberechtigungsprofils, das vorzugsweise in der Authentifizier- und Autorisiereinheit 60 hinterlegt ist. Das Marktplatzberechtigungsprofil enthält dabei Angaben darüber, in welchem Umfang Internetdienste von Nutzern des Marktplatzes in Anspruch genommen werden können, d.h. welche Funktionen innerhalb des Internetdienstes von Nutzern des Marktplatzes ausgeführt werden können.

Die Autorisierung eines Marktplatznutzers erfolgt vorzugsweise anhand eines Nutzerberechtigungsprofils in der Dienstanforderung, das ebenfalls kryptografisch abgesichert ist. Das Nutzerberechtigungsprofil wird vorzugsweise von Seiten des Internetmarktplatzes durch den Marktplatzserver 150, 160 bzw. ein in die Webseite des Internetmarktplatzes eingebettetes Skript in die Dienstanforderung eingebracht, oder es ist in dem Transformationsknoten 10 in einer Datenbank hinterlegt. In dem Nutzerberechtigungsprofil ist dabei angegeben, in welchem Umfang der Nutzer Internetdienste des Dienstanbieters in Anspruch nehmen kann. Auf diese Weise kann der Marktplatzbetreiber die Nutzer des Internetmarktplatzes mit unterschiedlichen Zugriffsrechten für die Internetdienste des Dienstanbieters ausstatten.

Innerhalb des Internetdienstes zur Verfügung stehende Funktionen bzw. der Umfang, in dem der Internetdienst in Anspruch genommen werden kann, beziehen sich dabei beispielsweise auf verschiedene Zahlungamöglichkeiten für die Inanspruchnahme des Internetdienstes, die Möglichkeit zur Speicherung von Daten auf dem Anbieterserver 100₁,...,100ₙ zur wiederverwendung bei einem erneuten Zugriff sowie die Größe des dafür zur Verfügung stehenden Speicherplatzes und andere zusätzliche Dienste, die im Rahmen des Internetdienstes angeboten werden.

Zur Durchführung der Autorisierung prüft die Autorisier- und Authentifiziereinheit 60 anhand des Marktplatzberechtigungsprofils und/oder des Nutzerberechtigungsprofils, ob und in welchem Umfang der Marktplatznutzer zur Inanspruchnahme des angeforderten Internetdienstes oder der angeforderten Internetdienste berechtigt ist. Ergibt die Prüfung, dass der Marktplatznutzer keine Berechtigung zur Inanspruchnahme des angeforderten Internetdienstes oder der angeforderten Internetdienste besitzt, wird vorzugsweise eine Fehlermeldung erzeugt und über den äußeren Konnektor 30₁,...,30ₙ an den Nutzercomputer 200 des Marktplatznutzers übermittelt.

Falls die angeforderten Internetdienste erst bei einer Auswertung der Dienstanforderung in der Transformationseinheit 40 identifiziert werden kann, übergibt die Autorisier- und Authentifiziereinheit 60 das Marktplatzberechtigungsprofil bzw. das Nutzerberechtigungeprofil an die Transformationseinheit 40. Auch in diesem Fall kann jedoch innerhalb der Autorisier- und Authentifiziereinheit 60 überprüft werden, ob der Marktplatznutzer überhaupt zur Inanspruchnahme von Internetdiensten des Dienstanbieters berechtigt ist, wobei eine Fehlermeldung erzeugt und an den Nutzercomputer 200 des Marktplatznutzers übermittelt wird, wenn dies nicht der Fall ist.

In dem Fall, dass mit der Dienstanforderung mehrere Internetdienste angefordert werden, entspricht die Authentifizierung und Autorisierung in der Authentifizier- und Autorisiereinheit 60 einer Zentralanmeldung (Single Sign-on) des Marktplatznutzer für die verschiedenen Internetdienste.

Die Transformationseinheit 40 nimmt die Dienstanforderung gegebenenfalls zusammen mit den ermittelten Berechtigungsinformationen von der Authentifizier- und Autorisiereinheit 60 entgegen. Abhängig von dem Inhalt der Dienstanforderung und gegebenenfalls abhängig von den in der Authentifizier- und Autorisiereinheit 60 ermittelten Berechtigungsinformationen wird die Dienstanforderung durch die Transformationseinheit 40 konvertiert. Da die Konvertierung im Gegensatz zu der statischen Formatänderung, die in den äußeren Konnektoren 30₁,..., 30ₙ vorgenommen wird, in Abhängigkeit von dem Inhalt der Dienstanforderung durchgeführt wird, wird sie hier auch als intelligente Konvertierung bezeichnet.

In der Transformationseinheit 40 werden zur intelligenten Konvertierung Prozesse ausgeführt, die eine Weiterleitung der Dienstanforderung an das betreffende auf einem der Anbieterserver 100₁,....,100ₘ ausgeführte Dienstprogramm ermöglichen. Im dem Fall, dass mit einer Dienstanforderung mehrere Internetdienste angefordert werden, erfolgt für jeden der Dienste eine Weiterleitung der Dienstanforderung oder des betreffenden Teils der Dienstanforderung an einen Anbieterserver 100₁,...,100ₘ in der im Folgenden beschriebenen Weise.

Die Transformationseinheit nimmt dabei ein so genanntes Routing der Dienstanforderung, d.h. abhängig von ihrem Inhalt wird der Anbieterserver 100₁,...,100ₘ ermittelt, auf dem das Dienstprogramm zur Ausführung des angeforderten Internetdienstes ausgeführt wird, und die Dienstanforderung wird an diesen Anbieterserver 100₁,...,100ₘ adressiert. Ferner erfolgen weitere intelligente Konvertierungen, wie beispielsweise eine Veränderung und Ergänzung von in der Dienstanforderung enthaltenen Daten.

Bei den intelligenten Konvertierungen kann es sich beispielsweise auch um Korrekturen handeln, die sich nach Plausibilitätsprüfungen oder nach einer Anwendung von Parsing-Regeln, d.h. von Regeln zur Interpretation der Dienstanforderung, ergeben. Werden beispielsweise bei einem Internetdienst zur Erstellung von Adressetiketten Postfachinformationen in einem Datenfeld erkannt, das zur Bezeichnung der Straße vorgesehen ist, so kann dies von der Transformationseinheit 40 korrigiert werden.

Ebenso ist es im Rahmen der intelligenten Konvertierung möglich, Dienstanforderungen so zu verändern, dass statt des angeforderten Internetdienstes ein aktuellerer, verbesserter oder günstigerer Dienst (beispielsweise im Rahmen einer Sonderaktion) ausgeführt wird.

In einer bevorzugten Ausführungsform der Erfindung ist darüber hinaus ein so genanntes dynamisches Routing vorgesehen, bei dem die Verfügbarkeit der Anbieterserver 100₁,...,100ₘ ermittelt und der Dienstanforderung an einen Anbieterserver 100₁,...,100ₘ adressiert wird, für den die Verfügbarkeit festgestellt wird. Ferner kann es auch vorgesehen sein, dass mittels der Transformationseinheit 40 ein so genanntes Load Balancing vorgenommen wird, bei dem neben der Verfügbarkeit auch die Auslastung des Servers 100₁,..., 100ₘ festgestellt und die Dienstanforderung an den Anbieterserver 100₁, ..., 100ₘ mit der geringsten Auslastung übermittelt wird.

Nach der Bearbeitung in der Transformationseinheit 40 wird die Dienstanforderung über eine Prüfeinheit 70 oder direkt an den inneren Konnektor 50₁,...,50ₘ, übermittelt, der mit dem ermittelten Anbieterserver 100₁,...,100ₘ verbunden ist.

In einer bevorzugten Ausführungsform der Erfindung ist es dabei zudem vorgesehen, dass zusammen mit der Dienstanforderung eine authentische Zusatzinformationen, beispielsweise eine verschlüsselte Informationen, von der Transformationseinheit 40 an den Anbieterserver 100₁,...,100ₘ übermittelt wird. Die Zusatzinformation wird dabei mit einem der Transformationseinheit 40 bzw. dem Transformationsknoten 10 eindeutig zugeordneten Schlüssel in dem Anbieterserver 100₁,...,100ₘ entschlüsselt, um zu überprüfen, ob die Dienstanforderung von dem Transformationsknoten 10 stammt. Auf eine zusätzliche Authentifizierung und/oder Autoririsierung des Markplatznutzers in dem Anbieterserver 100₁,..., 100ₘ kann damit in dieser Ausführungsform der Erfindung verzichtet werden.

Die inneren Konnektoren 50₁,..., 50ₘ sind in der Lage, statische Formatänderungen des Dienstprogrammaufrufs vorzunehmen und sind über Konnektorsteckplätze mit dem Transformationsknoten 10 verbunden, in die bei laufendem Betrieb innere Konnektoren 50₁,...,50ₘ eingesteckt und aus denen bei laufendem Betrieb innere Konnektoren 50₁,..., 50ₘ ausgesteckt werden können.

Aufgrund der Funktionsweise der inneren Konnektoren 50₁,...50ₘ ist bei einer Anpassung der Dienstprogramme auf den Anbieterservern 100₁,...,100ₘ lediglich eine Anpassung der Konnektoren 50₁,..., 50ₘ, nicht jedoch eine Anpassung der Transformationseinheit 40 erforderlich. Ferner können derartige Anpassungen auch bei laufendem Betrieb des Transformationsknotens 10 vorgenommen werden, indem die betroffenen inneren Konnektoren 50₁,...,50ₘ während der Anpassung ausgesteckt werden.

Über die inneren Konnektoren 50₁,...,50ₘ wird die Dienstanforderung dem ermittelten Anbieterserver 100₁,...,100ₘ übermittelt. Dies geschieht vorzugsweise über ein Netzwerk wie das Internet oder - wenn der Transformationsknoten 10 von den Dienstanbieter selbst betrieben wird - über ein internes Datennetzwerk des Dienstanbieters.

Nach der Bearbeitung der Dienstanforderung in dem auf dem Anbieterserver 100₁,...,100ₘ ausgeführten Dienstprogramm, d.h. nach der Ausführung des Dienstes sendet der Anbietereerver 100₁,...,100ₘ das Bearbeitungsergebnis, d.h. die in dem Anbieterserver 100₁,...,100ₘ bei der Ausführung des Internetdienstes bzw. des Dienstprogramms ermittelten Daten, zurück an den Transformationsknoten 10, wo es wiederum von dem inneren Konnektor 50₁,...,50ₘ empfangen wird.

Nach dem Empfang und nach der Durchführung von gegebenenfalls vorzunehmenden Formatänderungen innerhalb des inneren Konnektors 50₁, ..., 50ₘ wird das Bearbeitungsergebnis an die Prüfeinheit 70 übergeben, in der eine formale Überprüfung des Bearbeitungsergebnisses vorgenommen wird. Dabei wird geprüft, ob das Bearbeitungsergebnis vollständig und formal korrekt ist. Im Hinblick auf die Vollständigkeit wird dabei beispielsweise bei einer Anforderung eines digitalen Frankiervermerks durch einen Marktplatznutzer überprüft, ob das Bearbeitungsergebnis eine Druckvorlage bzw. eine Druckvorschau des Frankiervermerks umfasst. Die Kriterien zur Überprüfung sind für die Bearbeitungsergebnisse der verschiedenen Anbieterserver 100₁,...,100ₘ in einer Datenbank des Transformationsknotens 10 hinterlegt.

Sind Vollständigkeit oder Korrektheit nicht gegeben, so wird anstelle des Bearbeitungsergebnisses oder zusätzlich zu dem Bearbeitungsergebnis eine Benachrichtigung an den Nutzercomputer 200 des Marktplatznutzers übermittelt, in der auf einen Fehler hingewiesen wird.

Die Prüfeinheit 70 ist auch in der Lage, die Verfügbarkeit der Anbieterserver 100₁,...,100ₘ zu prüfen und das Ergebnis der Transformationseinheit mitzuteilen, so dass diese auf der Basis der Überprüfungsergebnisse das beschriebene dynamische Routing von Dienstanforderungen vornehmen kann.

Das geprüfte Bearbeitungsergebnis wird innerhalb des Transformationsknotens 10 entweder über die Transformationseinheit 40 oder unter Umgehung der Transformationseinheit 40 an den äußeren Konnektor 30₁,...,30ₙ geleitet, der mit dem Internetmarktplatz verbunden ist, von dem ursprünglich die Dienstanforderung stammt.

Eine weitere Bearbeitung des Bearbeitungsergebnisses in dem Transformationsknoten 40 ist dann notwendig, wenn neben einer Weiterleitung des Bearbeitungsergebnisses an den Nutzercomputer 200 des Marktplatznutzers bzw. an die Konsolidatorquelle 150 eine intelligente Verarbeitung des Bearbeitungsergebnisses vorgenommen werden soll.

Dabei kann es beispielsweise vorgesehen sein, dass im Falle eines Flächenmarktplatzes zusätzlich zu der Übermittlung des Bearbeitungsergebnisses an den Nutzercomputer 200 oder anstelle der Übermittlung des Bearbeitungsergebnisses an den Nutzercomputer 200 eine Übermittlung einer Benachrichtigung über das Bearbeitungsergebnis bzw. die Inanspruchnahme des Dienstes an die Streuquelle 160 erfolgt. Die Erzeugung dieser Benachrichtigung wird dabei in der Transformationseinheit vorgenommen. Gegenstand der Benachrichtigung kann dabei beispielsweise eine Angabe darüber sein, dass ein bestimmter Marktplatznutzer einen bestimmten Internetdienst in Anspruch genommen hat. Auf diese Weise kann das Ergebnis des Dienstes auch von der Streuquelle 160 an den Nutzercomputer 200 übermittelt werden.

Nach der optionalen Bearbeitung des Bearbeitungsergebnisses durch die Transformationseinheit 40 wird dieses entweder über die Authentifizier- und Autorisiereinheit 60 oder unter Umgehung dieser Einheit an den mit dem entsprechenden Internetmarktplatz verbundenen äußeren Konnektor 30₁,....,30ₘ geleitet.

In einer vorteilhaften Ausführungsform der Erfindung ist es dabei vorgesehen, dass das Nutzerberechtigungsprofil in der Autorisier- und Authentifiziereinheit 60 in Abhängigkeit von dem Bearbeitungsergebnis verändert werden kann.

So ist es beispielsweise möglich, Marktplatznutzern, die einen bestimmten Internetdienst häufig in Anspruch nehmen, im Rahmen eines "frequent user program" erweiterte Berechtigungen zuzuordnen, wobei die Autorisier- und Authentifiziereinheit 60 hierfür die Anzahl der an einen bestimmten Marktplatznutzer übermittelten Bearbeitungsergebnisse ermittelt.

Der äußere Konnektor 30₁,...,30ₘ nimmt die erforderlichen Formatänderungen vor, die der Formatänderung bei der Bearbeitung der Dienstanforderung in dem äußeren Konnektor 30₁,...,30ₘ entspricht oder unabhängig von dieser vorgegeben ist. Ferner können verschiedene Formatänderungen für das Bearbeitungsergbnis und für die aus dem Bearbeitungsergebnis bestimmte Benachrichtigung an die Streuquelle 160 vorgenommen werden.

Ferner ist es möglich, im Rahmen einer Konvertierung des Bearbeitungsergebnisses in der Transformationseinheit 40 oder im Rahmen der Formatänderung in dem äußeren Konnektor 30₁,...,30ₘ grafische Anpassungen des Bearbeitungsergebnisses vorzunehmen, so dass es an das Erscheinungsbild des Marktplatzes angepasst werden kann. Dies kann insbesondere dann vorgenommen werden, wenn es sich bei dem Bearbeitungsergebnis um eine Webseite mit bestimmten Informationen handelt.

Schließlich übermittelt der äußere Konnektor 30₁,...,30ₘ das Bearbeitungsergebnis an den Computer 200 des Marktplatznutzers, von dem die Dienstanforderung stammt, bzw. an die Konsolidatorquelle 150 eines Transit-Marktplatzes und gegebenenfalls zusätzlich an die Streuquelle 160 eines Flächenmarktplatzes.

Zur Administrierung und Überwachung des Transformationsknotens 10 ist eine Steuerungs- und Berichtseinheit so vorgesehen, die von einem Administrator bedient wird. An die Steuerungs- und Berichtseinheit 80 können ein oder mehrere externe Datenverarbeitungsgeräte 90 zur Auswertung von Nutzungsdaten des Transformationsknotens 10 angeschlossen sein.

Mittels der Steuerungs- und Berichtseinheit 80 können zum einen die Regeln zur Formatänderung in den äußeren Konnektoren 30₁,...,30ₙ und in den inneren Konnektoren 50₁,...,50ₘ, die Regeln für die Authentifizier- und Autorisiereinheit 60, die Regeln für die intelligente Konvertierung in der Transformationseinheit 40, sowie die Kriterien für die Prüfung der Bearbeitungsergebnisse in der Prüfeinheit 70 festgelegt werden. Zum anderen sind die Steuerungs- und Berichtseinheit 80 in der Lage, die Inanspruchnahme des Transformationsknotens 10 und der angeschlossenen Anbieterserver 100₁,...,100ₘ durch die Nutzer der Internetmarktplätze festzustellen und in Form von Zugriffstabellen und Statistiken zur Auswertung und Abrechnung bereitzustellen. Sämtliche Administrations- und Auewertungetätigkeiten können dabei auch über die angeschlossenen Datenverarbeitungsgeräte 90 vorgenommen werden.

Ferner können insbesondere Vergleiche zwischen dem Zeitpunkt, in dem eine Dienstanforderung in dem Transformationsknoten 10 empfangen wird und dem Zeitpunkt, in dem das Bearbeitungsergebnis von dem Transformationsknoten 10 abgesendet wird, durchgeführt werden, um so eine Bearbeitungsdauer zu ermitteln und die Einhaltung von Verfügbarkeitszusagen im Einzelfall und statistisch zu überprüfen. Hierzu werden die erforderlichen Informationen zur Auswertung von der Transformationseinheit 40 an die Steuerungs- und Berichtseinheit 80 übertragen und dort bzw. in den Datenverarbeitungsgeräten 90 ausgewertet.

Ein mögliches Anwendungsszenario der Erfindung betrifft die Bereitstellung von Frankier- und Logistikdiensten, die von einem Logistikunternehmen zur Verfügung gestellt werden, für Nutzer eines Auktionsportals, bei dem Waren im Rahmen von Auktionen von einem Verkäufer an einen Käufer versteigert werden. In der Regel werden die ersteigerten Waren dabei als Postsendung von dem verkäufer an den Käufer geschickt.

Im Rahmen der Erfindung können den in dem Auktionsportal auftretenden Verkäufern beispielsweise folgende Internetdienste angeboten werden:
- Ein Internetdienst zur Erzeugung von digitalen Frankiervermerken, die von dem Verkäufer mittels seines Nutzercomputers 200 ausgedruckt werden können.
- Ein Internetdienst zur Erstellung von Adressetiketten für den Versand von versteigerten waren.
- Internetdienste zur Bestimmung eines für die Versendung geeigneten Produkts des Logistikunternehmens und zur Ermittlung von Postleitzahlen.
- Ein Internetdienst zur Sendungsverfolgung (Tracking) der versandten Postsendungen.

Ein Verkäufer kann dabei beispielsweise bei der Abwicklung einer Auktion unmittelbar auf der Webseite des Auktionsportals eine Frankierung einer Postsendung zum Versand des versteigerten Artikels anstoßen.

Zur Frankierung kann dabei ein Internetdienst zur Erstellung digitaler Frankiervermerke genutzt werden, bei dem eine Druckvorlage eines kryptografisch abgesicherten digitalen Frankiervermerks in dem Anbieterserver 100₁,...,100ₘ erstellt und an den Nutzercomputer 200 des Verkäufers übermittelt wird. Bei der Druckvorlage kann es sich beispielsweise um ein PDF-Dokument handeln, das mit einem an den Nutzercomputer 200 angeschlossenen Drucker ausgedruckt werden kann.

Hierbei kann beispielsweise die üblicherweise bei der Nutzung des Frankierdienstes bestehende Notwendigkeit entfallen, dass Angaben wie Absender- und Empfängeradresse, gewünschtes Produkt und Druckmedium für die Erstellung des Frankiervermerks angegeben werden müssen, da diese Angaben innerhalb des Auktionsportals bekannt sind bzw. aus bekannten Angaben abgeleitet werden können. Vielmehr werden diese Informationen daher innerhalb des Auktionsportals zusammengestellt und in der Dienstanforderung an den Transformationsknoten 10 übermittelt. Der Transformationsknoten 10 und insbesondere die Transformationseinheit 40 übernehmen die intelligente Konvertierung in der Weise, dass bestimmte Prozessschritte, die ansonsten bei der Inanspruchnahme des Frankierdienstes durchzuführen sind, übersprungen werden können. Hierdurch wird der Prozess für den Verkäufer vereinfacht und beschleunigt. So können beispielsweise die Angaben über den Empfänger der Postsendung, d.h. über den Käufer der Waren, aus Daten entnommen werden, die währen der Auktion erfasst worden sind und die automatisch in die Dienstanforderung zur Inanspruchnahme des Frankierdienstes eingebracht werden können. Die Angaben über den Absender können ebenfalls von dem Internetmarktplatz bereitgestellt und automatisch in die Dienstanforderung eingebracht werden.

Im Rahmen der Bearbeitung der Dienstanforderung in dem Transformationsknoten 10 erfolgen eine Formatänderung der Dienstanforderung, eine Autorisierung der Nutzung des Frankierdienstes oder der anderen Dienste, das Routing und eine intelligente Konvertierung sowie die Weiterleitung der Dienstanforderung an den Anbieterserver 100₁,...,100ₘ, in dem der Frankierdienst ausgeführt wird.

Da es sich bei einem Auktionsportal in der Regel um einen Flächenmarktplatz handelt, wird das in dem Anbieterserver 100₁,...,100ₘ ermittelte Bearbeitungsergebnis von dem Transformationsknoten 10 unmittelbar an den Nutzercomputer 200 des Verkäufers übermittelt. In der Prüfeinheit 70 des Transformationsknotens 10 kann beispielsweise überprüft werden, ob das in dem Anbieterserver 100₁,..., 100ₘ bei der Ausführung des Frankierdienstes ermittelte Bearbeitungsergebnis die Druckvorlage des digitalen Frankiervermerks enthält. Ferner wird eine Benachrichtigung über die Ausführung des Frankierdienstes generiert und an die Streuquelle 160 des Auktionsportals übermittelt. Diese kann beispielsweise auch dazu dienen, dem Verkäufer auf der Webseite des Auktionsportals eine Information über die erfolgreiche Ausführung des Frankierdienstes anzeigen zu können.

Weiterhin ist es möglich, Zugriffslisten und Statistiken über die Nutzung der Frankier- und Logistikdienste durch Nutzer des Auktionsportals zu erstellen.

Schließlich dient der Transformationsknoten dazu, die mit dem Internetmarktplatz vereinbarten Rahmenbedingungen für die Bereitstellung der Dienste (engl. "Service Level Agreement", kurz "SLA") zu überprüfen und Abweichungen zu melden und zu dokumentieren. Wichtig in diesem Zusammenhang sind u.a. die Verfügbarkeit der Anbieterserver 100₁,..., 100ₘ, (d.h. Anforderungen' müssen bearbeitet werden können) und die Bearbeitungsdauer (d.h. Bearbeitungsergebnisse müssen innerhalb einer bestimmten Zeit vorliegen).

### Bezugszeichenliste:

- 10: Transformationsknoten
- 20: Konnektor-Steckplatz
- 30: Äußerer Konnektor
- 40: Transformationseinheit
- 50: Innerer Konnektor
- 60: Authentifizier- und Autorisiereinheit
- 70: Prüfeinheit
- 80: Steuerungs- und Berichtseinheit
- 90: Datenverarbeitungsgerät
- 100: Anbieterserver
- 150: Konsolidatorquelle ("Transit-Marktplatz")
- 160: Streuquelle ("Flächen-Marktplatz")
- 200: Nutzercomputer

## Patentansprüche

1. Netzwerkknoten zum Bereitstellen wenigstens eines Internetdienstes, der in wenigstens einem Anbieterserver (100₁,..., 100ₘ) eines Dienstanbieters ausgeführt wird, für Nutzer eines Internetmarktplatzes, umfassend
- wenigstens einen äußeren Konnektor (30₁,..., 30ₙ) zum Empfangen einer Dienstanforderung, deren Erzeugung in einem Nutzercomputer (200) eines Internetmarktplatznutzers initiierbar ist, und zum Übermitteln eines in dem Anbieterserver (100₁,..., 100ₘ) ermittelten Bearbeitungsergebnisses an den Nutzercomputer (200),
- wobei der Internetdienst auf einer Webseite des Internetmarktplatzes anforderbar ist, die von einem mit dem Nutzercomputer (200) verbundenen Marktplatzserver (150, 160) bereitgestellt wird, und
- wobei der äußere Konnektor (30₁,...,30ₙ) in der Lage ist, eine an den Internetmarktplatz angepasste Formatänderung der Dienstanforderung und des Bearbeitungsergebnisses vorzunehmen,
- eine mit dem äußeren Konnektor (30₁,...,30ₙ) verbundene Transformationseinheit (40) zum Ermitteln wenigstens eines Anbieterservers (100₁,..., 100ₘ) zur Ausführung des Internetdienstes anhand von Angaben, die in der Dienstanforderung enthalten sind, und zum Adressieren der Dienstanforderung an den ermittelten Anbieterserver (100₁,..., 100ₘ),
- eine Autorisier -und Authentifiziereinheit (60) zum Überprüfen der Berechtigung des Internetmarktplatznutzers zum Zugriff auf den Internetdienst und
- wenigstens einen mit der Transformationseinheit (40) verbundenen inneren Konnektor (50₁,...,50ₘ) zum Übermitteln der Dienstanforderung an den Anbieterserver (100₁,..., 100ₘ) und zum Empfangen des in dem Anbieterserver (100₁,...,100ₘ) ermittelten Bearbeitungsergebnisses von dem Anbieterserver (100₁,...,100ₘ).
**dadurch gekennzeichnet,**
**dass** die Überprüfung der Berechtigung des Internetmarktplatznutzers zum Zugriff auf einen Internetdienst anhand eines dem Internetmarktplatz zugeordneten Marktplatzberechtigungsprofils durchführbar ist.

2. Netzwerkknoten nach Anspruch 1,
**dadurch gekennzeichnet,**
**dass** der äußere Konnektor (30₁,...,30ₙ) durch einen Konnektorsteckplatz (20) mit dem Netzwerkknoten (10) verbindbar ist, wobei der äußere Konnektor (30₁,...,30ₙ) im laufenden Betrieb des Netzwerkknotens (10) mit dem Netzwerkknoten (10) verbindbar und von dem Netzwerkknoten (10) trennbar ist.

3. Netzwerkknoten nach einem der Ansprüche 1 und 2,
**dadurch gekennzeichnet,**
**dass** der äußere Konnektor (30₁,...,30ₙ) über ein Kommunikationsnetz mit wenigstens einem Nutzercomputer (200) verbunden ist, wobei der Nutzercomputer (200) über das Kommunikationsnetz mit einem Marktplatzserver (150, 160) verbunden ist.

4. Netzwerkknoten nach einem der vorangegangenen Ansprüche,
**dadurch gekennzeichnet,**
**dass** die Transformationseinheit (40) in Abhängigkeit von dem in dem Anbieterserver (100₁,...,100ₘ) ermittelten Bearbeitungsergebnis eine Benachrichtigung über das Bearbeitungsergebnis erzeugt, die von dem äußeren Konnektor (30₁,...,30ₙ) an den Marktplatzserver (150, 160) übermittelt wird.

5. Netzwerkknoten nach einem der vorangegangenen Ansprüche,
**dadurch gekennzeichnet,**
**dass** der innere Konnektor (50₁,...,50ₘ) dazu in der Lage ist, eine Formatänderung der Dienstanforderung und des Bearbeitungsergebnisses vorzunehmen.

6. Netzwerkknoten nach einem der vorangegangenen Ansprüche,
**dadurch gekennzeichnet,**
**dass** der innere Konnektor (50₁,...,50ₘ) durch einen Konnektorsteckplatz mit dem Netzwerkknoten (10) verbindbar ist, wobei der innere Konnektor (50₁,...,50ₘ) im laufenden Betrieb des Netzwerkknotens (10) mit dem Netzwerkknoten verbunden und von dem Netzwerkknoten (10) getrennt werden kann.

7. Netzwerkknoten nach einem der vorangegangenen Ansprüche,
**dadurch gekennzeichnet,**
**dass** die Überprüfung der Berechtigung des Internetmarktplatznutzers zum Zugriff auf einen Internetdienst anhand des dem Internetmarktplatz zugeordneten Marktplatzberechtigungsprofils und anhand eines dem Marktplatznutzer zugeordneten Nutzerberechtigungsprofils durchführbar ist.

8. Netzwerkknoten nach einem der vorangegangenen Ansprüche,
**dadurch gekennzeichnet,**
**dass** die Dienstanforderung eine Information enthält, die mit einem dem Internetmarktplatz eindeutig zugeordneten Schlüssel verschlüsselt ist und in der Autorisier- und Authentifiziereinheit (60) entschlüsselbar ist.

9. Netzwerkknoten nach einem der vorangegangenen Ansprüche,
**dadurch gekennzeichnet,**
**dass** das Nutzerberechtigungsprofil in der Dienstanforderung enthalten ist.

10. Netzwerkknoten nach einem der vorangegangenen Ansprüche,
**dadurch gekennzeichnet,**
**dass** das Nutzerberechtigungsprofil mit einem dem Internetmarktplatz eindeutig zugeordneten Schlüssel verschlüsselt ist oder mit einer digitalen Signatur des Internetmarktplatzes versehen ist.

11. Netzwerkknoten nach einem der vorangegangenen Ansprüche,
**dadurch gekennzeichnet,**
**dass** die Autorisier- und Authentifiziereinheit (60) das Nutzerberechtigungsprofil in Abhängigkeit von dem in dem Anbieterserver (100₁,..., 100ₘ) ermittelten Bearbeitungsergebnis verändern kann.

12. Netzwerkknoten nach einem der vorangegangenen Ansprüche,
**dadurch gekennzeichnet,**
**dass** die Autorisier- und Authentifiziereinheit (60) das Nutzerberechtigungsprofil in Abhängigkeit einer Anzahl von für einen Marktplatznutzer ermittelten Bearbeitungsergebnissen verändern kann.

13. Netzwerkknoten nach einem der vorangegangenen Ansprüche,
**dadurch gekennzeichnet,**
**dass** er eine Prüfeinheit (70) zum Überprüfen des in dem Anbieterserver (100₁,...,100ₘ) ermittelten Bearbeitungsergebnisses umfasst.

14. Netzwerkknoten nach einem der vorangegangenen Ansprüche,
**dadurch gekennzeichnet,**
**dass** die Prüfeinheit (70) dazu in der Lage ist, eine Vollständigkeit des Bearbeitungsergebnisses zu überprüfen.

15. Netzwerkknoten nach einem der vorangegangenen Ansprüche,
**dadurch gekennzeichnet,**
**dass** er eine Berichtseinheit (80) zum Erfassen und Auswerten der Dienstanforderungen und des Bearbeitungsergebnisses aufweist.

16. Verfahren zum Bereitstellen wenigstens eines Internetdienstes, der in wenigstens einem Anbieterserver (100₁,...,100ₘ) eines Dienstanbieters für Nutzer eines Internetmarktplatzes ausgeführt wird, mit den Schritten:
- Empfangen einer in einem Nutzercomputer (200) eines Internetmarktplatznutzers initiierten Dienstanforderung in einem äußeren Konnektor (30₁,...,30ₙ) eines Netzwerkknotens (10), wobei der Internetdienst auf einer Webseite des Internetmarktplatzes angefordert wird, die von einem mit dem Nutzercomputer (200) verbundenen Marktplatzserver (150, 160) bereitgestellt wird,
- Vornehmen von Formatänderungen der Dienstanforderung in dem äußeren Konnektor (30₁,...,30ₙ),
- Ermitteln eines Anbieterservers (100₁,..., 100ₘ) anhand von Angaben, die in der Dienstanforderung enthalten sind und Adressieren der Dienstanforderung an den Anbieterserver (100₁,..., 100ₘ) ,
- Übermitteln der Dienstanforderung an den Anbieterserver (100₁,...,100ₘ),
- Ermitteln eines Bearbeitungsergebnisses in dem Anbieterserver (100₁,...,100ₘ) und Übermitteln des Bearbeitungsergebnisses an den Netzwerkknoten (10) und
- Empfangen des Bearbeitungsergebnisses in dem Netzwerkknoten (10) und Übermitteln des Bearbeitungsergebnisses an den Nutzercomputer (200),
**dadurch gekennzeichnet,**
**dass** die Berechtigung des Internetmarktplatznutzers zum Zugriff auf den Internetdienst anhand eines dem Internetmarktplatz zugeordneten Marktplatzberechtigungsprofils überprüft wird.

17. Verfahren nach Anspruch 16,
**dadurch gekennzeichnet,**
**dass** der äußere Konnektor (30₁,..., 30ₙ) über ein Kommunikationsnetz mit wenigstens einem Nutzercomputer (200) verbunden ist, wobei der Nutzercomputer (200) über das Kommunikationsnetz mit einem Marktplatzserver (150, 160) verbunden ist.

18. Verfahren nach einem der Ansprüche 16 und 17,
**dadurch gekennzeichnet,**
**dass** in Abhängigkeit von dem in dem Anbieterserver (100₁,..., 100ₘ) ermittelten Bearbeitungsergebnis eine Benachrichtigung über das Bearbeitungsergebnis erzeugt wird, die von dem äußeren Konnektor (30₁,...,30ₙ) an den Marktplatzserver (150, 160) übermittelt wird.

19. Verfahren nach einem der Ansprüche 16 bis 18,
**dadurch gekennzeichnet,**
**dass** der Netzwerkknoten (10) über einen inneren Konnektor (50₁,...,50ₘ) mit dem Anbieterserver (100₁,...,100ₘ) verbunden ist und dass in dem inneren Konnektor (50₁,...,50ₘ) eine Formatänderung der Dienstanforderung und des Bearbeitungsergebnisses vorgenommen wird.

20. Verfahren nach einem der Ansprüche 16 bis 19,
**dadurch gekennzeichnet,**
**dass** die Berechtigung des Internetmarktplatznutzers zum Zugriff auf einen Internetdienst anhand des dem Internetmarktplatz zugeordneten Marktplatzberechtigungsprofil und anhand eines dem Marktplatznutzer zugeordneten Nutzerberechtigungsprofils überprüft wird.

21. Verfahren nach einem der Ansprüche 16 bis 20,
**dadurch gekennzeichnet,**
**dass** in der Dienstanforderung eine verschlüsselte Information enthalten ist, die mit einem dem Internetmarktplatz eindeutig zugeordneten Schlüssel entschlüsselt wird.

22. Verfahren nach einem der Ansprüche 16 bis 21,
**dadurch gekennzeichnet,**
**dass** das Nutzerberechtigungsprofil in der Dienstanforderung enthalten ist.

23. Verfahren nach einem der Ansprüche 16 bis 22,
**dadurch gekennzeichnet,**
**dass** das Nutzerberechtigungsprofil mit einem dem Internetmarktplatz eindeutig zugeordneten Schlüssel verschlüsselt ist oder mit einer digitalen Signatur des Internetmarktplatzes versehen ist.

24. Verfahren nach einem der Ansprüche 16 bis 23,
**dadurch gekennzeichnet,**
**dass** das Nutzerberechtigungsprofil in Abhängigkeit von dem in dem Anbieterserver (100₁,..., 100ₘ) ermittelten Bearbeitungsergebnis verändert wird.

25. Verfahren nach einem der Ansprüche 16 bis 24,
**dadurch gekennzeichnet,**
**dass** das Nutzerberechtigungsprofil in Abhängigkeit einer Anzahl von für einen Internetmarktplatznutzers ermittelten Bearbeitungsergebnissen verändert wird.

26. Verfahren nach einem der Ansprüche 16 bis 25,
**dadurch gekennzeichnet,**
**dass** eine Vollständigkeit des Bearbeitungsergebnisses überprüft wird.

27. Verfahren nach einem der Ansprüche 16 bis 26,
**dadurch gekennzeichnet,**
**dass** die Dienstanforderungen und das Bearbeitungsergebnis in einer Berichtseinheit des Netzwerkknotens (10) erfasst werden.

## Claims

1. A network node for providing at least one Internet service that is executed in at least one provider server (100₁, ..., 100ₘ) of a service provider for users of an Internet marketplace, comprising
• at least one outer connector (30₁, ..., 30ₙ) for receiving a service request whose generation can be initiated in a user computer (200) of an Internet marketplace user and for transmitting to the user computer (200) a processing result ascertained in the provider server (100₁, ..., 100ₘ),
• whereby the Internet service can be requested on a website of the Internet marketplace that is provided by a marketplace server (150, 160) connected to the user computer (200), and
• whereby the outer connector (30₁, ..., 30ₙ) is capable of making a format change to the service request and to the processing result, as an adaptation to the Internet marketplace,
• a transformation unit (40) connected to the outer connector (30₁, ..., 30ₙ) for ascertaining at least one provider server (100₁, ..., 100ₘ) for executing the Internet service on the basis of information contained in the service request and for addressing the service request to the ascertained provider server (100₁, ..., 100ₘ),
• an authentication and authorization unit (60) for verifying the authorization of the Internet marketplace user to access the Internet service and
• at least one inner connector (50₁, ..., 50ₘ) connected to the transformation unit (40) for transmitting the service request to the provider server (100₁, ..., 100ₘ) and for receiving the processing result ascertained in the provider server (100₁, ..., 100ₘ) from said provider server (100₁, ..., 100m),
**characterized in that**
the verification of the authorization of the Internet marketplace user to access an Internet service can be carried out on the basis of a marketplace authorization profile associated with the Internet marketplace.

2. The network node according to Claim 1,
**characterized in that**
the outer connector (30₁, ..., 30ₙ) can be connected to the network node (10) by means of a connector slot (20), whereby the outer connector (30₁, ..., 30ₙ) can be connected to the network node (10) and can be disconnected from the network node (10) during the ongoing operation of the network node (10).

3. The network node according to one of Claims 1 and 2,
**characterized in that**
the outer connector (30₁, ..., 30ₙ) is connected via a communication network to at least one user computer (200), whereby the user computer (200) is connected via the communication network to a marketplace server (150, 160).

4. The network node according to one of the preceding claims,
**characterized in that**,
as a function of the processing result ascertained in the provider server (100₁, ..., 100ₘ), the transformation unit (40) generates a notification about the processing result, and the processing result is then transmitted from the outer connector (30₁, ..., 30ₙ) to the marketplace server (150, 160).

5. The network node according to one of the preceding claims,
**characterized in that**
the inner connector (50₁, ..., 50ₘ) is capable of making a format change to the service request and to the processing result.

6. The network node according to one of the preceding claims,
**characterized in that**
the inner connector (50₁, ..., 50ₘ) can be connected to the network node (10) by a connector slot, whereby the inner connector (50₁, ..., 50ₘ) can be connected to the network node and can be disconnected from the network node (10) during the ongoing operation of the network node (10).

7. The network node according to one of the preceding claims,
**characterized in that**
the verification of the authorization of the Internet marketplace user to access an Internet service can be carried out on the basis of the marketplace authorization profile associated with the Internet marketplace and on the basis of a user authorization profile associated with the marketplace user.

8. The network node according to one of the preceding claims,
**characterized in that**
the service request contains information that is encrypted using a key that is unambiguously associated with the Internet marketplace and that can be decrypted in the authentication and authorization unit (60).

9. The network node according to one of the preceding claims,
**characterized in that**
the user authorization profile is contained in the service request.

10. The network node according to one of the preceding claims,
**characterized in that**
the user authorization profile is encrypted using a key that is unambiguously associated with the Internet marketplace or is furnished with a digital signature of the Internet marketplace.

11. The network node according to one of the preceding claims,
**characterized in that**
the authentication and authorization unit (60) can change the user authorization profile as a function of the processing result ascertained in the provider server (100₁, ..., 100ₘ).

12. The network node according to one of the preceding claims,
**characterized in that**
the authentication and authorization unit (60) can change the user authorization profile as a function of a number of processing results ascertained for a marketplace user.

13. The network node according to one of the preceding claims,
**characterized in that**
the it comprises a verification unit (70) for verifying the processing result ascertained in the provider server (100₁, ..., 100ₘ).

14. The network node according to one of the preceding claims,
**characterized in that**
the verification unit (70) is capable of verifying the completeness of the processing result.

15. The network node according to one of the preceding claims,
**characterized in that**
it has a reporting unit (80) for acquiring and evaluating the service requests and the processing result.

16. A method for providing at least one Internet service that is executed in at least one provider server (100₁, ..., 100ₘ) of a service provider for users of an Internet marketplace, comprising the steps:
• receiving in an outer connector (30₁, ..., 30ₙ) of a network node (10) a service request initiated in a user computer (200) of an Internet marketplace user, whereby the Internet service is requested on a website of the Internet marketplace that is provided by a marketplace server (150, 160) connected to the user computer (200),
• making format changes to the service request in the outer connector (30₁, ...,30ₙ),
• ascertaining a provider server (100₁, ..., 100ₘ) on the basis of information contained in the service request, and addressing the service request to the provider server (100₁, ..., 100ₘ),
• transmitting the service request to the provider server (100₁, ..., 100ₘ),
• ascertaining a processing result in the provider server (100₁, ..., 100ₘ) and transmitting the processing result to the network node (10) and
• receiving the processing result in the network node (10) and transmitting the processing result to the user computer (200),
**characterized in that**
the authorization of the Internet marketplace user to access the Internet service is verified on the basis of a marketplace authorization profile associated with the Internet marketplace.

17. The method according to Claim 16,
**characterized in that**
the outer connector (30₁, ..., 30ₙ) is connected via a communication network to at least one user computer (200), whereby the user computer (200) is connected via the communication network to a marketplace server (150, 160).

18. The method according to one of Claims 16 and 17,
**characterized in that**,
as a function of the processing result ascertained in the provider server (100₁, ...., 100ₘ), a notification about the processing result is generated that is then transmitted from the outer connector (30₁, ..., 30ₙ) to the marketplace server (150, 160).

19. The method according to one of Claims 16 to 18,
**characterized in that**
the network node (10) is connected to the provider server (100₁, ..., 100ₘ) via an inner connector (50₁, ..., 50ₘ), and **in that** a format change to the service request and to the processing result is made in the inner connector (50₁, ...,50ₘ).

20. The method according to one of Claims 16 to 19,
**characterized in that**
the authorization of the Internet marketplace user to access an Internet service is verfied on the basis of a marketplace authorization profile associated with the Internet marketplace and/or on the basis of a user authorization profile associated with the marketplace user.

21. The method according to one of Claims 16 to 20,
**characterized in that**
the service request contains encrypted information that is decrypted using a key that is unambiguously associated with the Internet marketplace.

22. The method according to one of Claims 16 to 21,
**characterized in that**
the user authorization profile is contained in the service request.

23. The method according to one of Claims 16 to 22,
**characterized in that**
the user authorization profile is encrypted using a key that is unambiguously associated with the Internet marketplace or is furnished with a digital signature of the Internet marketplace.

24. The method according to one of Claims 16 to 23,
**characterized in that**
the user authorization profile is changed as a function of the processing result ascertained in the provider server (100₁, ..., 100ₘ).

25. The method according to one of Claims 16 to 24,
**characterized in that**
the user authorization profile is changed as a function of a number of processing results ascertained for an Internet marketplace user.

26. The method according to one of Claims 16 to 25,
**characterized in that**
the completeness of the processing result is verified.

27. The method according to one of Claims 16 to 26,
**characterized in that**
the service requests and the processing result are acquired in a reporting unit of the network node (10).

## Revendications

1. Noeud de réseau pour mettre à disposition, pour des utilisateurs d'une place de marché Internet, au moins un service Internet qui est exécuté dans un moins un serveur de fournisseur (100₁, ..., 100ₘ) d'un fournisseur de services, comprenant
- au moins un connecteur externe (30₁, ..., 30ₙ) pour recevoir une requête de service dont la génération peut être initialisée dans un ordinateur d'utilisateur (200) d'un utilisateur de place de marché Internet et pour transmettre à l'ordinateur d'utilisateur. (200) un résultat de traitement établi dans le serveur de fournisseur (100₁, ..., 100ₘ),
- le service Internet pouvant être demandé sur une page web de la place de marché Internet qui est mise à disposition par un serveur de place de marché (150, 160) relié à l'ordinateur d'utilisateur (200),
- le connecteur externe (30₁, ..., 30ₙ) étant en mesure d'effectuer une modification de format, adaptée à la place de marché Internet, de la requête de service et du résultat de traitement,
- une unité de transformation (40), reliée au connecteur externe (30₁, ..., 30ₙ), pour déterminer au moins un serveur de fournisseur (100₁, ..., 100ₘ) pour exécuter le service Internet à l'aide d'indications qui sont contenues dans la requête de service et pour adresser la requête de service au serveur de fournisseur établi (100₁, ..., 100ₘ),
- une unité d'autorisation et d'authentification (60) pour vérifier l'autorisation de l'utilisateur de la place de marché Internet à accéder au service Internet et
- au moins un connecteur interne (50₁, ..., 50ₘ), relié à l'unité de transformation (40), pour transmettre la requête de service au serveur de fournisseur (100₁, ..., 100ₘ) et pour recevoir le résultat de traitement du serveur de fournisseur (100₁, ..., 100ₘ), établi dans le serveur de fournisseur (100₁, ..., 100ₘ),
**caractérisé en ce que** la vérification de l'autorisation de l'utilisateur de place de marché Internet à accéder à un service Internet peut être effectuée à l'aide d'un profil d'autorisation de place de marché associé à la place de marché Internet.

2. Noeud de réseau selon la revendication 1, **caractérisé en ce que** le connecteur externe (30₁, ..., 30ₙ) peut être relié au noeud de réseau (10) par une prise de connecteur (20), le connecteur externe (30₁, ..., 30ₙ) pouvant, pendant que le noeud de réseau (10) est en service, être relié au noeud de réseau (10) et séparé du noeud de réseau (10).

3. Noeud de réseau selon l'une des revendications 1 et 2, **caractérisé en ce que** le connecteur externe (30₁, ..., 30ₙ) est relié à au moins un ordinateur d'utilisateur (200) via un réseau de communication, l'ordinateur d'utilisateur (200) étant relié à un serveur de place de marché (150, 160) via le réseau de communication.

4. Noeud de réseau selon l'une des revendications précédentes, **caractérisé en ce que** l'unité de transformation (40), en fonction du résultat de traitement établi dans le serveur de fournisseur (100₁, ..., 100ₘ), génère une notification du résultat de traitement, laquelle est transmise par le connecteur externe (30₁, ..., 30ₙ) au serveur de place de marché (150, 160).

5. Noeud de réseau selon l'une des revendications précédentes, **caractérisé en ce que** le connecteur interne (50₁, ..., 50ₘ) est en mesure d'effectuer un changement de format de la requête de service et du résultat de traitement.

6. Noeud de réseau selon l'une des revendications précédentes, **caractérisé en ce que** le connecteur interne (50₁, ..., 50ₘ) peut être relié au noeud de réseau (10) par une prise de connecteur, le connecteur interne (50₁, ..., 50ₙ) pouvant, pendant que le noeud de réseau (10) est en service, être relié au noeud de réseau (10) et séparé du noeud de réseau (10).

7. Noeud de réseau selon l'une des revendications précédentes, **caractérisé en ce que** la vérification de l'autorisation de l'utilisateur de place de marché Internet à accéder à un service Internet peut être effectuée à l'aide du profil d'autorisation de place de marché associé à la place de marché Internet et à l'aide d'un profil d'autorisation d'utilisateur associé à l'utilisateur de place de marché.

8. Noeud de réseau selon l'une des revendications précédentes, **caractérisé en ce que** la requête de service contient une information qui est cryptée avec une clé associée univoquement à la place de marché Internet et est décryptable dans l'unité d'autorisation et d'authentification (60).

9. Noeud de réseau selon l'une des revendications précédentes, **caractérisé en ce que** le profil d'autorisation d'utilisateur est contenu dans la requête de service.

10. Noeud de réseau selon l'une des revendications précédentes, **caractérisé en ce que** le profil d'autorisation d'utilisateur est crypté avec une clé associée univoquement à la place de marché Internet ou est pourvu d'une signature numérique de la place de marché Internet.

11. Noeud de réseau selon l'une des revendications précédentes, **caractérisé en ce que** l'unité d'autorisation et d'authentification (60) peut modifier le profil d'autorisation d'utilisateur en fonction du résultat de traitement établi dans le serveur de fournisseur (100₁, ..., 100ₘ).

12. Noeud de réseau selon l'une des revendications précédentes, **caractérisé en ce que** l'unité d'autorisation et d'authentification (60) peut modifier le profil d'autorisation d'utilisateur en fonction d'un nombre de résultats de traitement établis pour un utilisateur de place de marché.

13. Noeud de réseau selon l'une des revendications précédentes, **caractérisé en ce qu'**il comprend une unité de contrôle (70) pour vérifier le résultat de traitement établi dans le serveur de fournisseur (100₁, ..., 100ₘ).

14. Noeud de réseau selon l'une des revendications précédentes, **caractérisé en ce que** l'unité de contrôle (70) est en mesure de vérifier une intégralité du résultat de traitement.

15. Noeud de réseau selon l'une des revendications précédentes, **caractérisé en ce qu'**il comporte une unité de rapport (80) pour saisir et évaluer les requêtes de services et le résultat de traitement.

16. Procédé pour mettre à disposition au moins un service Internet qui est exécuté dans au moins un serveur de fournisseur (100₁, ..., 100ₘ) d'un fournisseur de services pour des utilisateurs d'une place de marché Internet, comportant les étapes suivantes:
- recevoir, dans un connecteur externe (30₁, ..., 30ₙ) d'un noeud de réseau (10), une requête de service initialisée dans un ordinateur d'utilisateur (200) d'un utilisateur de place de marché Internet, le service Internet étant demandé sur une page web de la place de marché Internet qui est mise à disposition par un serveur de place de marché (150, 160) relié à l'ordinateur d'utilisateur (200),
- effectuer des modifications de format de la requête de service dans le connecteur externe (30₁, ..., 30ₙ),
- déterminer un serveur de fournisseur (100₁, ..., 100ₘ) à l'aide d'indications qui sont contenues dans la requête de service et adresser la requête de service au serveur de fournisseur (100₁, ... , 100ₘ),
- transmettre la requête de service au serveur de fournisseur (100₁, ... ,100ₘ),
- établir un résultat de traitement dans le serveur de fournisseur (100₁, ..., 100ₘ) et transmettre le résultat de traitement au noeud de réseau (10) et
- recevoir le résultat de traitement dans le noeud de réseau (10) et transmettre le résultat de traitement à l'ordinateur d'utilisateur (200),
**caractérisé en ce que** l'autorisation de l'utilisateur de place de marché Internet à accéder au service Internet est vérifiée à l'aide d'un profil d'autorisation de place de marché associé à la place de marché Internet.

17. Procédé selon la revendication 16, **caractérisé en ce que** le connecteur externe (30₁, ..., 30ₙ) est relié à au moins un ordinateur d'utilisateur (200) via un réseau de communication, l'ordinateur d'utilisateur (200) étant relié à un serveur de place de marché (150, 160) via le réseau de communication.

18. Procédé selon l'une des revendications 16 et 17, **caractérisé en ce qu'**est générée, en fonction du résultat de traitement établi dans le serveur de fournisseur (100₁, ..., 100ₘ), une notification du résultat de traitement qui est transmise par le connecteur externe (30₁, ..., 30ₙ) au serveur de place de marché (150, 160).

19. Procédé selon l'une des revendications 16 à 18, **caractérisé en ce que** le noeud de réseau (10) est relié au serveur de fournisseur (100₁, ..., 100ₘ) via un connecteur interne (50₁, ..., 50ₘ) et **en ce qu'**est effectuée, dans le connecteur interne (50₁, ..., 50ₘ), une modification de format de la requête de service et du résultat de traitement.

20. Procédé selon l'une des revendications 16 à 19, **caractérisé en ce que** l'autorisation de l'utilisateur de place de marché Internet à accéder à un service Internet est vérifiée à l'aide du profil d'autorisation de place de marché associé à la place de marché Internet et à l'aide d'un profil d'autorisation d'utilisateur associé à l'utilisateur de place de marché.

21. Procédé selon l'une des revendications 16 à 20, **caractérisé en ce qu'**est contenue, dans la requête de service, une information cryptée qui est décryptée avec une clé associée univoquement à la place de marché Internet.

22. Procédé selon l'une des revendications 16 à 21, **caractérisé en ce que** le profil d'autorisation d'utilisateur est contenu dans la requête de service.

23. Procédé selon l'une des revendications 16 à 22, **caractérisé en ce que** le profil d'autorisation d'utilisateur est crypté avec une clé associée univoquement à la place de marché Internet ou est pourvu d'une signature numérique de la place de marché Internet.

24. Procédé selon l'une des revendications 16 à 23, **caractérisé en ce que** le profil d'autorisation d'utilisateur est modifié en fonction du résultat de traitement établi dans le serveur de fournisseur (100₁, ..., 100ₘ).

25. Procédé selon l'une des revendications 16 à 24, **caractérisé en ce que** le profil d'autorisation d'utilisateur est modifié en fonction d'un nombre de résultats de traitement établis pour un utilisateur de place de marché Internet.

26. Procédé selon l'une des revendications 16 à 25, **caractérisé en ce qu'**une intégralité du résultat de traitement est vérifiée.

27. Procédé selon l'une des revendications 16 à 26, **caractérisé en ce que** les requêtes de services et le résultat de traitement sont saisis dans une unité de rapport du noeud de réseau (10).
